# EUROPEAN PATENT APPLICATION

(11) **EP 4 296 493 A1**
(43) Date of publication of application: **27.12.2023**
(21) Application number: 23180628.2
(22) Date of filing: 21.06.2023
(51) Int. Cl.: F02C 7/236

(54) **DUAL FUEL PUMP SYSTEM FOR AN AIRCRAFT**

(30) Priority: 22.06.2022 US 202217846583
(71) Applicant: Hamilton Sundstrand Corporation, Charlotte, NC 28217-4578 (US)
(72) Inventor: MASTROCOLA, Naison E., Goshen, CT, 06756 (US); SUSCA, Ryan Prescott, Windsor, CT, 06095 (US)
(74) Representative: Dehns

(57) **Abstract**

According to an aspect, a dual fuel pump system includes a primary run-dry fuel pump (112) having multiple stages (202A-202N), each of the stages configured to produce fuel pressure between a pump stage inlet (210A-210N) and a pump stage outlet (212A-212N), and at least one of the stages operable in a run-dry mode. A secondary run-dry fuel pump (114) is operable in run-dry mode, where the secondary run-dry fuel pump is mechanically driven by an accessory gearbox (40) of an engine of the aircraft. An electric motor (124) is operably coupled to the primary run-dry fuel pump and configured to drive rotation of the stages of the primary run-dry fuel pump. A controller (150) is configured to pressurize fuel using a single stage of the primary run-dry fuel pump, pressurize fuel using at least two stages of the primary run-dry fuel pump, and pressurize fuel using the secondary run-dry fuel pump under various operating conditions.

## Description

### BACKGROUND

Embodiments pertain to the art of aircraft and, more particularly, to a dual fuel pump system for an aircraft.

Aircraft typically employ a fixed displacement pump to deliver fuel to combustors. The fixed displacement pump is sized to deliver a fuel flow that satisfies a peak flow demand operating condition such as takeoff. In other than peak flow demand operating conditions, a portion of fuel needed to satisfy demand is passed to the combustor while the remaining portion of the fuel is bypassing the combustors to serve other purposes.

Aircraft fuel pumps are typically driven by an accessory gearbox that is driven by rotation of an aircraft engine. Under certain operating conditions, such as a flameout during flight, there can be delays in re-establishing fuel flow due to reduced rotation of the engine, resulting in reduced performance of the fuel pump.

### BRIEF DESCRIPTION

Disclosed is a dual fuel pump system for an aircraft. The dual fuel pump system includes a primary run-dry fuel pump having multiple stages, each of the stages configured to produce fuel pressure between a pump stage inlet and a pump stage outlet, and at least one of the stages operable in a run-dry mode. A secondary run-dry fuel pump is operable in the run-dry mode, where the secondary run-dry fuel pump is mechanically driven by an accessory gearbox of an engine of the aircraft. An electric motor is operably coupled to the primary run-dry fuel pump and configured to drive rotation of the stages of the primary run-dry fuel pump. A controller is configured to pressurize fuel using a single stage of the primary run-dry fuel pump in a first engine power setting range between start and cruise, pressurize fuel using at least two stages of the primary run-dry fuel pump at a second engine power setting range between climb and takeoff, pressurize fuel using the single stage of the primary run-dry fuel pump at an engine power setting below the first engine power setting range, and pressurize fuel using the secondary run-dry fuel pump to provide pressurized fuel to an actuation system of the aircraft while the single stage of the primary run-dry fuel pump is driven to pump fuel at the engine power setting below the first engine power setting range.

In addition to one or more of the features described above or below, or as an alternative, further embodiments may include where the secondary run-dry fuel pump includes a single pump stage operable in the run-dry mode.

In addition to one or more of the features described above or below, or as an alternative, further embodiments may include where a primary pump outlet of the primary run-dry fuel pump is operably coupled to a main fuel passage, and a pump outlet of the secondary run-dry fuel pump is operably coupled to a secondary flow passage.

In addition to one or more of the features described above or below, or as an alternative, further embodiments may include a valve operatively coupled to the main fuel passage and the secondary flow passage, where the controller is configured to open the valve to provide pressurized fuel from the primary run-dry fuel pump to the actuation system at the first engine power setting range and/or the second engine power setting range.

In addition to one or more of the features described above or below, or as an alternative, further embodiments may include where the controller is configured to flood the single stage of the primary run-dry fuel pump with fuel in the first engine power setting range while the secondary run-dry fuel pump runs in the run-dry mode.

In addition to one or more of the features described above or below, or as an alternative, further embodiments may include where the controller is configured to flood at least two stages of the primary run-dry fuel pump with fuel at the second engine power setting range while the secondary run-dry fuel pump runs in the run-dry mode.

In addition to one or more of the features described above or below, or as an alternative, further embodiments may include where the controller is configured to flood the secondary run-dry fuel pump with fuel while the single stage of the primary run-dry fuel pump is flooded with fuel at the engine power setting below the first engine power setting range and one or more stages of the primary run-dry fuel pump run in the run-dry mode.

Also disclosed is an aircraft engine system for an aircraft. The aircraft engine system includes a compressor section including a number of compressor stages, a turbine section, a combustor fluidically connected to the compressor section and the turbine section, and a dual fuel pump system. The dual fuel pump system includes a primary run-dry fuel pump having multiple stages, each of the stages configured to produce fuel pressure between a pump stage inlet and a pump stage outlet, and at least one of the stages operable in a run-dry mode, a secondary run-dry fuel pump operable in the run-dry mode, where the secondary run-dry fuel pump is mechanically driven by an accessory gearbox of an engine of the aircraft, an electric motor operably coupled to the primary run-dry fuel pump and configured to drive rotation of the stages of the primary run-dry fuel pump, and a controller. The controller is configured to pressurize fuel using a single stage of the primary run-dry fuel pump in a first engine power setting range between start and cruise and pressurize fuel using the secondary run-dry fuel pump to provide pressurized fuel to an actuation system of the aircraft while the single stage of the primary run-dry fuel pump is driven to pump fuel at the engine power setting below the first engine power setting range.

In addition to one or more of the features described above or below, or as an alternative, further embodiments may include where the controller is configured to pressurize fuel using at least two stages of the primary run-dry fuel pump at a second engine power setting range between climb and takeoff, and pressurize fuel using the single stage of the primary run-dry fuel pump at an engine power setting below the first engine power setting range.

In addition to one or more of the features described above or below, or as an alternative, further embodiments may include where a primary pump outlet of the primary run-dry fuel pump is operably coupled to a main fuel passage, and a pump outlet of the secondary run-dry fuel pump is operably coupled to a secondary flow passage.

In addition to one or more of the features described above or below, or as an alternative, further embodiments may include a valve operatively coupled to the main fuel passage and the secondary flow passage, where the controller is configured to open the valve to provide pressurized fuel from the primary run-dry fuel pump to the actuation system at the first engine power setting range and/or the second engine power setting range.

In addition to one or more of the features described above or below, or as an alternative, further embodiments may include where the controller is configured to flood the single stage of the primary run-dry fuel pump with fuel in the first engine power setting range while the secondary run-dry fuel pump runs in the run-dry mode.

In addition to one or more of the features described above or below, or as an alternative, further embodiments may include where the controller is configured to flood at least two stages of the primary run-dry fuel pump with fuel at the second engine power setting range while the secondary run-dry fuel pump runs in the run-dry mode.

In addition to one or more of the features described above or below, or as an alternative, further embodiments may include where the controller is configured to flood the secondary run-dry fuel pump with fuel while the single stage of the primary run-dry fuel pump is flooded with fuel at the engine power setting below the first engine power setting range and one or more stages of the primary run-dry fuel pump run in the run-dry mode.

Further disclosed is a method of controlling a dual fuel pump system of an aircraft. The method includes pressurizing fuel using a single stage of a primary run-dry fuel pump of the dual fuel pump system in a first engine power setting range between start and cruise, where the primary run-dry fuel pump includes multiple stages driven by an electric motor, pressurizing fuel using at least two stages of the primary run-dry fuel pump at a second engine power setting range between climb and takeoff, and pressurizing fuel using the single stage of the primary run-dry fuel pump at an engine power setting below the first engine power setting range. The method also includes pressurizing fuel using a secondary run-dry fuel pump of the dual fuel pump system to provide pressurized fuel to an actuation system of the aircraft while the single stage of the primary run-dry fuel pump is driven to pump fuel at the engine power setting below the first engine power setting range, where the secondary run-dry fuel pump is operably coupled to an accessory gearbox driven by an engine of the aircraft.

In addition to one or more of the features described above or below, or as an alternative, further embodiments may include where a primary pump outlet of the primary run-dry fuel pump is operably coupled to a main fuel passage, a pump outlet of the secondary run-dry fuel pump is operably coupled to a secondary flow passage, and a valve is operatively coupled to the main fuel passage and the secondary flow passage.

In addition to one or more of the features described above or below, or as an alternative, further embodiments may include opening the valve to provide pressurized fuel from the primary run-dry fuel pump to the actuation system at the first engine power setting range and/or the second engine power setting range.

In addition to one or more of the features described above or below, or as an alternative, further embodiments may include flooding the single stage of the primary run-dry fuel pump with fuel in the first engine power setting range while the secondary run-dry fuel pump runs in the run-dry mode.

In addition to one or more of the features described above or below, or as an alternative, further embodiments may include flooding at least two stages of the primary run-dry fuel pump with fuel at the second engine power setting range while the secondary run-dry fuel pump runs in the run-dry mode.

In addition to one or more of the features described above or below, or as an alternative, further embodiments may include flooding the secondary run-dry fuel pump with fuel while the single stage of the primary run-dry fuel pump is flooded with fuel at the engine power setting below the first engine power setting range and one or more stages of the primary run-dry fuel pump run in the run-dry mode.

### BRIEF DESCRIPTION OF THE DRAWINGS

The following descriptions should not be considered limiting in any way. With reference to the accompanying drawings, like elements are numbered alike:
FIG. 1 is a schematic depiction of an engine for an aircraft, in accordance with a non-limiting example;
FIG. 2 is a schematic depiction of an aircraft fuel system including a dual fuel pump system, in accordance with a non-limiting example;
FIG. 3 is a schematic depiction of a primary run-dry fuel pump, in accordance with a non-limiting example;
FIG. 4 is a depiction of a table that illustrates wet/dry operating states of the dual fuel pump system in various operating modes, in accordance with a non-limiting example; and
FIG. 5 is a depiction of a process, in accordance with a non-limiting example.

### DETAILED DESCRIPTION

A detailed description of one or more embodiments of the disclosed apparatus and method are presented herein by way of exemplification and not limitation with reference to the Figures.

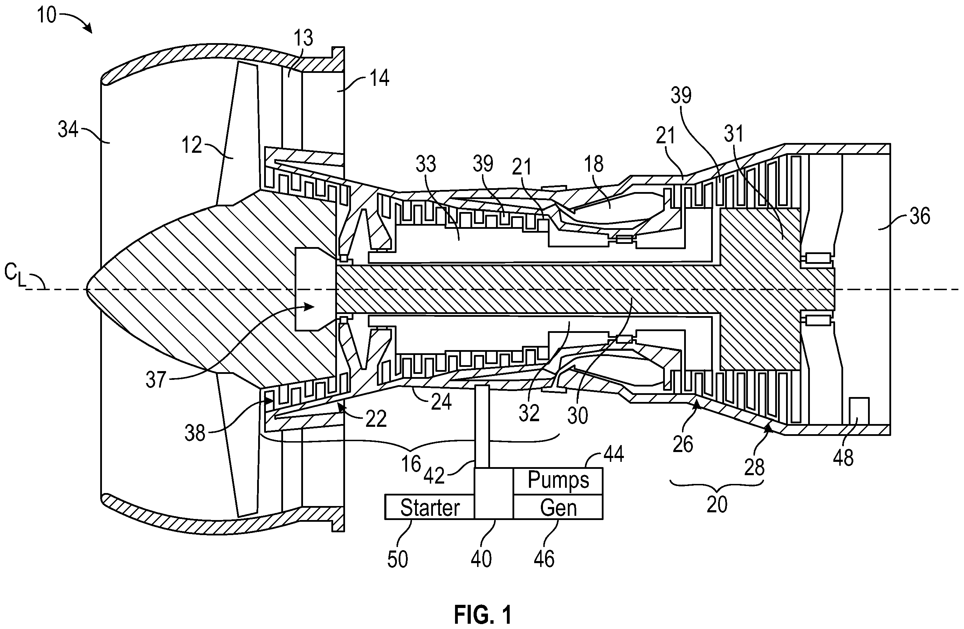

Referring now to FIG. 1, a cross-sectional view of a gas turbine engine 10, in a turbofan configuration for an aircraft is illustrated. The illustrated gas turbine engine 10 includes a propulsion fan 12 mounted inside a bypass duct 14 upstream of a fan exit guide vane 13. A power core of the engine is formed by a compressor section 16, a combustor 18 and a turbine section 20. Rotor blades (or airfoils) 21 in the compressor section 16 and/or the turbine section 20 are arranged in stages 38 (e.g., compressor stages and turbine stages) with corresponding stator vane airfoils 39.

In the two-spool, high bypass configuration of FIG. 1, compressor section 16 includes a low pressure compressor 22 (a lower pressure compressor section) and a high pressure compressor 24 (a highest pressure compressor section). The turbine section 20 includes high a pressure turbine 26 and a low pressure turbine 28.

The low pressure compressor 22 is rotationally coupled to the low pressure turbine 28 via a low pressure shaft 30, thereby forming the low pressure spool or low spool 31. High pressure compressor 24 is rotationally coupled to the high pressure turbine 26 via a high pressure shaft 32, forming the high pressure spool or high spool 33.

During operation of the gas turbine engine 10, the fan 12 accelerates air flow from an inlet 34 through bypass duct 14, generating thrust. The core airflow is compressed in the low pressure compressor 22 and the high pressure compressor 24 and then the compressed airflow is mixed with fuel in the combustor 18 and ignited to generate combustion gas.

The combustion gas expands to drive the high and low pressure turbines 26 and 28, which are rotationally coupled to high pressure compressor 24 and low pressure compressor 22, respectively. Expanded combustion gases exit through exhaust nozzle 36, which is shaped to generate additional thrust from the exhaust gas flow. An exhaust gas temperature sensor 48 may detect exhaust gas temperature of the gas turbine engine 10.

In advanced turbofan designs with a low pressure turbine and a high pressure turbine, the low pressure shaft 30 may be coupled to a low pressure compressor and then to a fan 12 via a geared drive mechanism 37, providing fan speed control for increased efficiency and reduced engine noise. Propulsion fan 12 may also function as a first-stage compressor for gas turbine engine 10, with low pressure compressor 22 performing as an intermediate-stage compressor or booster in front of the high pressure compressor. Alternatively, the low pressure compressor stages are absent, and air from fan 12 is provided directly to high pressure compressor 24, or to an independently rotating intermediate compressor spool. The geared drive mechanism 37 can be omitted in various embodiments.

An accessory gearbox 40 is mechanically coupled via a tower shaft 42 to a rotating portion of the gas turbine engine 10, such as the high pressure spool 33. Rotation of various engine accessories, such as pumps 44 (e.g., fuel and oil pumps) and electric generators 46 (also referred to as engine generators 46), can be driven through the accessory gearbox 40 as depicted schematically in FIG. 1. A starter 50, such as an electric or pneumatic modulating speed controllable starter, can also be coupled to the accessory gearbox 40. In embodiments, the starter 50 enables fully modulated (variable) speed control over a starter operating range from zero speed to above a nominal ground-based engine starting speed for a starting spool of the gas turbine engine 10 (e.g., high spool 33).

The gas turbine engine 10 may have a range of different shaft and spool geometries, including one-spool, two-spool and three-spool configurations, in both corotating and counter-rotating designs. Gas turbine engine 10 may also be configured as a low bypass turbofan, an open-rotor turbofan, a ducted or un-ducted propeller engine, or an industrial gas turbine.

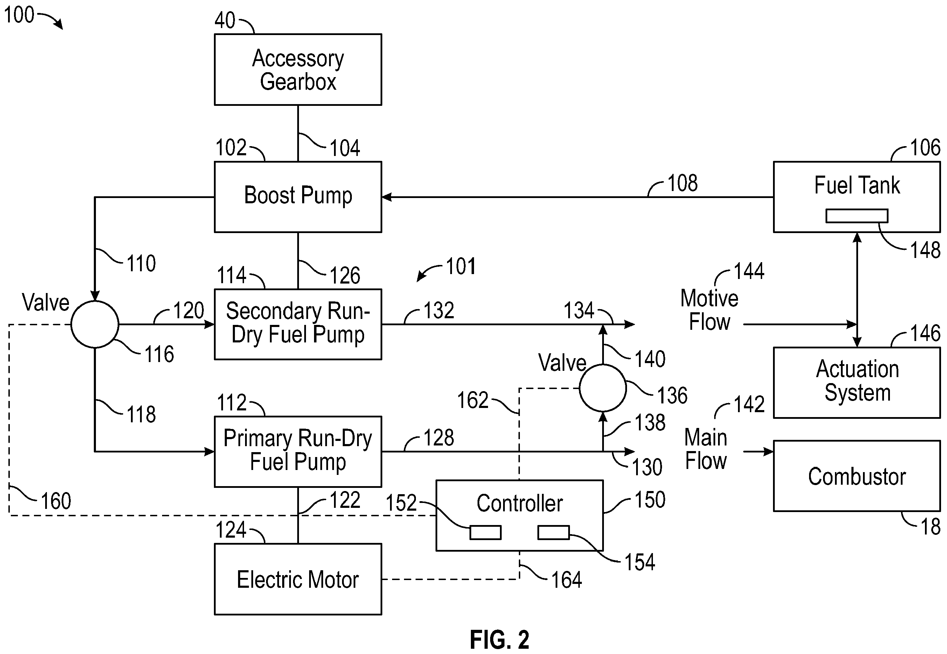

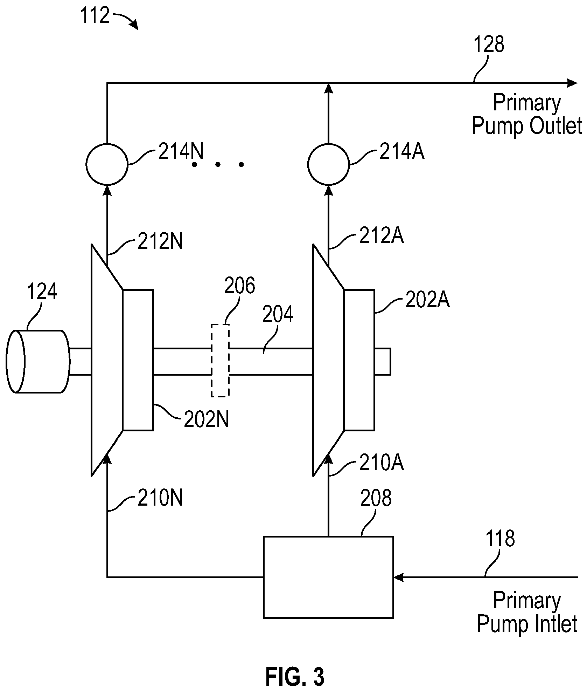

FIG. 2 depicts an example of an aircraft fuel system 100 including a dual fuel pump system 101. The combination of the dual fuel pump system 101 and the engine 10 of FIG. 1 may be referred to as an aircraft engine system. The aircraft fuel system 100 can include a boost pump 102 driven by a mechanical linkage 104 to urge fuel from a fuel tank 106 in a low pressure fuel line 108. The boost pump 102 can be a relatively low horsepower centrifugal pump that provides fuel flow 110 to the dual fuel pump system 101 with sufficient suction head for higher pressure pumping by a primary run-dry fuel pump 112 and/or a secondary run-dry fuel pump 114. Fuel flow to a primary pump inlet 118 of the primary run-dry fuel pump 112 and/or to a pump inlet 120 of the secondary run-dry fuel pump 114 can be controlled by a valve 116, such as a shutoff valve. The primary run-dry fuel pump 112 is operably coupled to an electric motor 124 through a linkage 122 that is configured to drive rotation of one or more stages of the primary run-dry fuel pump 112. The secondary run-dry fuel pump 114 is mechanically driven by the accessory gearbox 40 through a mechanical linkage 126. The primary run-dry fuel pump 112 can include multiple stages with two or more separately controllable pressure outputs with at least one stage operable in a run-dry mode as further described with respect to FIG. 3. The secondary run-dry fuel pump 114 can be a single pump stage operable in the run-dry mode (e.g., a centrifugal pump). Run-dry refers to the ability of pump stages to continue operating in the absence of fuel. The pump stages operated absent fuel can be flooded with fuel at a controlled rate to output pressurized fuel. This prevents the need to use a clutch to engage and disengage the pumps 112, 114. The boost pump 102 in combination with the secondary run-dry fuel pump 114 are examples of the pumps 44 coupled to the accessory gearbox 40, while the primary run-dry fuel pump 112 operates independent of the accessory gearbox 40.

A primary pump outlet 128 of the primary run-dry fuel pump 112 is operably coupled to a main fuel passage 130. A pump outlet 132 of the secondary run-dry fuel pump 114 is operably coupled to a secondary flow passage 134. A valve 136 can be operatively coupled to the main fuel passage 130 and the secondary flow passage 134. For example, a first connector passage 138 can provide a fuel flow path between the main fuel passage 130 and the valve 136, and a second connector passage 140 can provide a fuel flow path between the valve 136 and the secondary flow passage 134. The main fuel passage 130 can provide a main flow 142 of pressurized fuel to the combustor 18. The secondary flow passage 134 can provide a motive flow 144 to an actuation system 146 (e.g., to power fueldralic actuators) and a return flow to the fuel tank 106. A local pump 148, such as an ejector, can be used to urge a portion of the motive flow 144 back into the fuel tank 106.

A controller 150 can control various actions of the gas turbine engine 10 of FIG. 1 and the aircraft fuel system 100, including the dual fuel pump system 101. The controller 150, which may be implemented within a gas turbine engine controller, such as a Full Authority Digital Engine Controller (FADEC) or other electronic engine controller (EEC), controls the flow of fuel to the combustor 18. To do so, the controller 150 receives various input signals and controls the fuel flow rate to the combustor 18 accordingly. In particular, the controller 150 can receive an input control signal from, for example, throttle control equipment (not illustrated) in the cockpit, a compressor discharge pressure signal representative of the discharge pressure from the compressor section 16 in the engine 10, and an ambient pressure signal representative of ambient pressure around the engine 10, for instance. The controller 150 can also receive a mass flow meter feedback signal from a mass flow meter. The controller 150 can also receive an exhaust gas temperature from an exhaust gas temperature sensor, as well as other signals related to commands and operational performance of the engine 10. The controller 150, in response to these signals, can control valves 116, 136, the electric motor 124 through control signals 160, 162, 164, and other outputs to obtain a desired fuel pressure to the combustor 18 and actuation system 146. The controller 150 can also control an ignition system to combust fuel from fuel nozzles in the combustor 18. Memory 154 of the controller 150 stores values, algorithms, maps, and other reference data for calculation and/or retrieval by the controller 150 and other components of the system 100. One of ordinary skill will recognize that, in one or more embodiments of the present disclosure, common software control and evaluation operations such as calculating, receiving, sending, referencing, and determining are steps conducted by the controller 150 with or without using data stored in the memory 154.

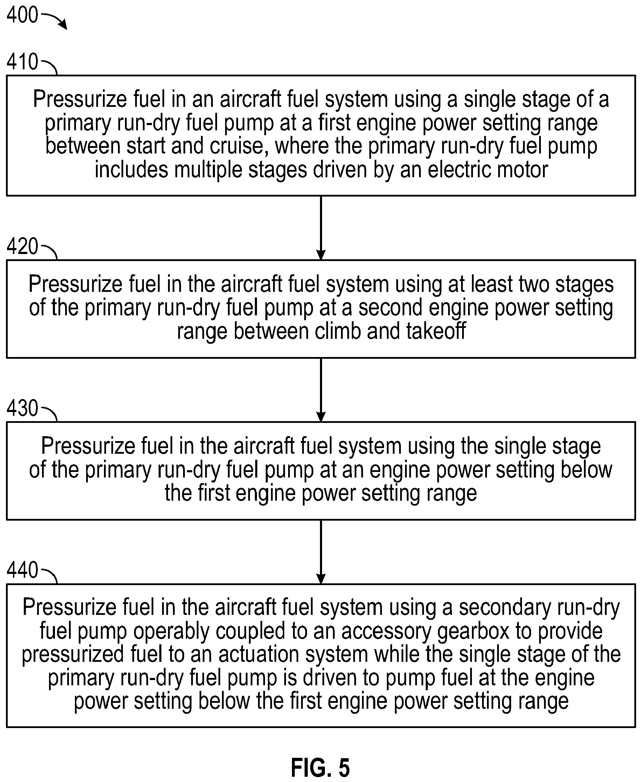

The controller 150 includes one or more processors 152 that can be any type of central processing unit (CPU), including a microprocessor, a digital signal processor (DSP), a microcontroller, an application specific integrated circuit (ASIC), a field programmable gate array (FPGA), or the like. Also, in embodiments, the memory 154 may include random access memory (RAM), read only memory (ROM), or other electronic, optical, magnetic, or any other computer readable medium onto which is stored data and algorithms in a non-transitory form. The memory 154 can store instructions for execution by the one or more processors 152 as a computer readable storage medium in a non-transitory form. The controller 150 can include other interfaces (not depicted), such as various communication interfaces, input/output interfaces, power supplies, and the like. The controller can implement a process 400 as further described with respect to FIG. 5.

In FIG. 3, an example of the primary run-dry fuel pump 112 is depicted in greater detail. The primary run-dry fuel pump 112 can include a plurality of stages 202A-202N that can be coupled to a common shaft 204 driven to rotate by the electric motor 124. The stages 202A-202N can rotate at the same speed or may be rotated at different speeds, for instance, based on a gearing 206 can be coupled between one or more of the stages 202A-202N. The stages 202A-202N can each include a centrifugal pump portion configured to operate in a run-dry mode with no fuel received or a flooded mode that receives and pressurizes fuel. A control member 208 can control the distribution of fuel to each of the stages 202A-202N. Each of the stages 202A-202N can have a corresponding pump stage inlet 210A-210N, pump stage outlet 212A-212N, and valve 214A-214N. The control member 208 can include one or more inlet shutoff valve, solenoid valve, metering valve, ejector pump, and/or other such components to control the flow of fuel from the primary pump inlet 118 to the pump stage inlets 210A-210N based on commands from the controller 150 of FIG. 2. The valves 214A-214N can be check valves to prevent backflow when one or more of the stages 202A-202N is operated in the run-dry mode.

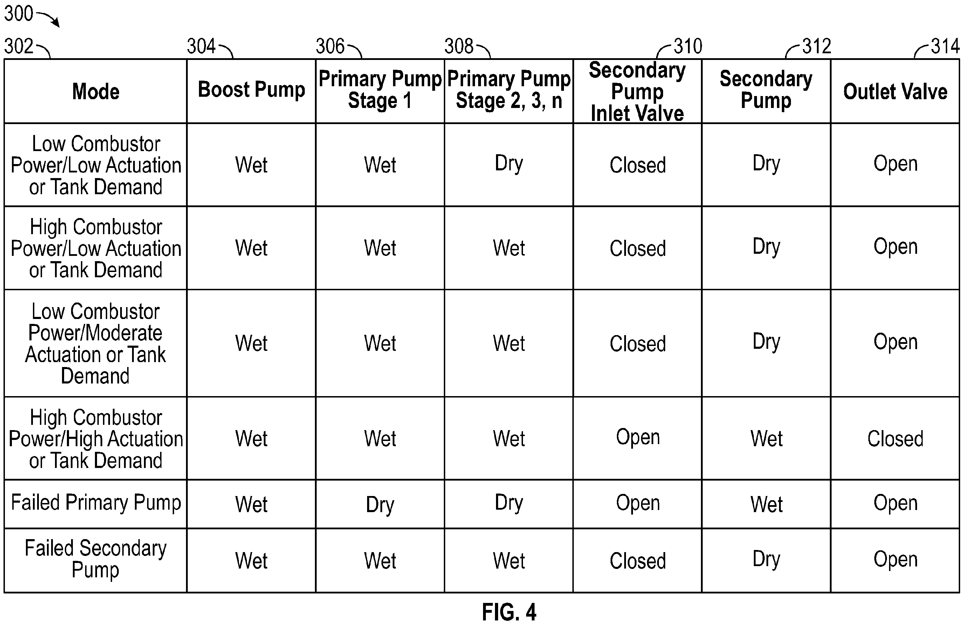

FIG. 4 is a depiction of a table 300 that illustrates wet/dry operating states of the dual fuel pump system 101 in various operating modes, in accordance with a non-limiting example. Column 302 of table 300 lists various modes of operation, such as a low combustor power/low actuation or tank demand mode, a high combustor power/low actuation or tank demand mode, a low combustor power/moderate actuation or tank demand mode, a high combustor power/high actuation or tank demand mode, a failed primary pump mode, and a failed secondary pump mode. Values associated with the terms "low", "moderate", and "high" can be defined through lookup tables, constants, fuzzy reasoning logic, or other such approaches as threshold conditions. Further, there can be threshold bands or hysteresis bands around values defined as "low", "moderate", and "high" such that a range of values may define each of the modes of column 302, and the modes are not limited to a single precisely defined set of conditions. Column 304 defines the operating state of the boost pump 102 of FIG. 2 for each of the corresponding modes of column 302. The term "wet" in table 300 indicates that fuel is expected to be present, and the term "dry" indicates that a component is expected to be operated in the absence of fuel at the designated component for columns 304, 306, 308, and 312.

Column 306 defines an operating state of a primary stage 202A of FIG. 3 of the primary run-dry fuel pump 112 as operating wet or dry for each of the corresponding modes of column 302. Column 308 defines an operating state of other stages 202 of the primary run-dry fuel pump 112 as operating wet or dry for each of the corresponding modes of column 302. Column 310 defines an operating state of an inlet valve at the pump inlet 120 of the secondary run-dry fuel pump 114 as closed or open for each of the corresponding modes of column 302. Column 312 defines an operating state of the secondary run-dry fuel pump 114 as operating wet or dry for each of the corresponding modes of column 302. Column 314 defines an operating state of an outlet valve at a pump outlet 132 of the secondary run-dry fuel pump 114 as closed or open for each of the corresponding modes of column 302. Although table 300 depicts one example configuration, it will be understood that additional modes, component states, and alternate configurations can be defined according to various aspects.

FIG. 5 illustrates a process 400 for controlling a dual fuel pump system 101 of FIG. 2 according to an embodiment. The process 400 is described with continued reference to FIGS. 1-4. Although depicted in a particular order in FIG. 5, it will be understood that blocks of process 400 can be performed in an alternate order, further subdivided, combined, and/or performed with additional steps.

At block 410, the controller 150 can control pressurizing fuel using a single stage 202 of the primary run-dry fuel pump 112 of the dual fuel pump system 101 in a first engine power setting range between start and cruise, where the primary run-dry fuel pump 112 includes multiple stages 202A-202N driven by an electric motor 124.

At block 420, the controller 150 can control pressurizing fuel using at least two stages 202A-202N of the primary run-dry fuel pump 112 at a second engine power setting range between climb and takeoff.

At block 430, the controller 150 can control pressurizing fuel using the single stage 202 of the primary run-dry fuel pump 112 at an engine power setting below the first engine power setting range.

At block 440, the controller 150 can control pressurizing fuel using a secondary run-dry fuel pump 114 of the dual fuel pump system 101 to provide pressurized fuel to an actuation system 146 of the aircraft while the single stage 202 of the primary run-dry fuel pump 112 is driven to pump fuel at the engine power setting below the first engine power setting range, where the secondary run-dry fuel pump 114 is operably coupled to an accessory gearbox driven 40 by an engine 10 of the aircraft.

In embodiments, a primary pump outlet 128 of the primary run-dry fuel pump 112 is operably coupled to a main fuel passage 130, a pump outlet 132 of the secondary run-dry fuel pump 114 is operably coupled to a secondary flow passage 134, and a valve 136 is operatively coupled to the main fuel passage 130 and the secondary flow passage 134. The controller 150 can open the valve 136 to provide pressurized fuel from the primary run-dry fuel pump 112 to the actuation system 146 at the first engine power setting range and/or the second engine power setting range.

In embodiments, pressurizing fuel can include flooding the single stage 202 of the primary run-dry fuel pump 112 with fuel in the first engine power setting range while the secondary run-dry fuel pump 114 runs in the run-dry mode. Pressurizing fuel can also include flooding at least two stages 202 of the primary run-dry fuel pump 112 with fuel at the second engine power setting range while the secondary run-dry fuel pump 114 runs in the run-dry mode. Further, pressurizing fuel can include flooding the secondary run-dry fuel pump 114 with fuel while the single stage 202 of the primary run-dry fuel pump 112 is flooded with fuel at the engine power setting below the first engine power setting range and one or more stages 202 of the primary run-dry fuel pump 112 run in the run-dry mode.

Other combinations can be performed to select between directing pressurized fuel to the actuation system 146 and/or combustor 18. For example, when operating with a single stage 202 flooded and the secondary run-dry fuel pump 114 operating in dry-run mode, the pressurized fuel output from the primary run-dry fuel pump 112 can support actuation leakage and/or low levels of return flow to the fuel tank 106. When operating with two or more stages 202 of the primary run-dry fuel pump 112 and the secondary run-dry fuel pump 114 operating in dry-run mode, the pressurized fuel output from the primary run-dry fuel pump 112 can support low-level actuation transient conditions (e.g., below an actuation change limit). For larger level transients of actuation system 146 (e.g., above an actuation change limit) or at higher return flow demand to the fuel tank 106, the secondary run-dry fuel pump 114 can be flooded and used to provide additional fuel pressurization beyond the output of the primary run-dry fuel pump 112. Further, the primary run-dry fuel pump 112 and the secondary run-dry fuel pump 114 can be operated in a backup mode to provide fault tolerance should one of the pumps 112, 114 fail. For instance, the valve 136 can be opened and the secondary run-dry fuel pump 114 can provide pressurized fuel for the main flow 142 and the motive flow 144 if one or more stages 202 of the primary run-dry fuel pump 112 fails. The ability to control flooding of one or more stages 202 can provide a faster response time for transients as compared to the use of mechanical components, such as a clutch, which may take additional time to engage and get mechanically linked components to reach a target speed.

Using an electrically driven pump as the primary fuel pump can provide faster responsiveness and support operating modes where the desired fuel pump output exceeds the ability of the accessory gearbox 40 to provide sufficient power to meet the demand (e.g., to support faster in-flight relight).

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an example embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A dual fuel pump system for an aircraft comprising:
a primary run-dry fuel pump (112) comprising multiple stages (202A-202N), each of the stages configured to produce fuel pressure between a pump stage inlet (210A-202N) and a pump stage outlet (212A-212N), and at least one of the stages operable in a run-dry mode;
a secondary run-dry fuel pump (114) operable in the run-dry mode, wherein the secondary run-dry fuel pump is mechanically driven by an accessory gearbox (40) of an engine of the aircraft;
an electric motor (124) operably coupled to the primary run-dry fuel pump and configured to drive rotation of the stages of the primary run-dry fuel pump; and
a controller (150) configured to:
pressurize fuel using a single stage of the primary run-dry fuel pump in a first engine power setting range between start and cruise;
pressurize fuel using at least two stages of the primary run-dry fuel pump at a second engine power setting range between climb and takeoff;
pressurize fuel using the single stage of the primary run-dry fuel pump at an engine power setting below the first engine power setting range; and
pressurize fuel using the secondary run-dry fuel pump to provide pressurized fuel to an actuation system of the aircraft while the single stage of the primary run-dry fuel pump is driven to pump fuel at the engine power setting below the first engine power setting range.

2. The dual fuel pump system according to claim 1, wherein the secondary run-dry fuel pump (114) comprises a single pump stage operable in the run-dry mode.

3. The dual fuel pump system according to claim 1 or 2, wherein a primary pump outlet (128) of the primary run-dry fuel pump (112) is operably coupled to a main fuel passage (130), and a pump outlet (132) of the secondary run-dry fuel pump (114) is operably coupled to a secondary flow passage (134); and optionally wherein the dual fuel pump system further comprises:
a valve (136) operatively coupled to the main fuel passage (130) and the secondary flow passage, wherein the controller (150) is configured to open the valve to provide pressurized fuel from the primary run-dry fuel pump to the actuation system at the first engine power setting range and/or the second engine power setting range.

4. The dual fuel pump system according to claim 1, 2 or 3, wherein the controller (150) is configured to flood the single stage of the primary run-dry fuel pump (112) with fuel in the first engine power setting range while the secondary run-dry fuel pump (114) runs in the run-dry mode; and/or wherein the controller (150) is configured to flood at least two stages of the primary run-dry fuel pump with fuel at the second engine power setting range while the secondary run-dry fuel pump runs in the run-dry mode.

5. The dual fuel pump system according to any preceding claim, wherein the controller (150) is configured to flood the secondary run-dry fuel pump (114) with fuel while the single stage of the primary run-dry fuel pump (112) is flooded with fuel at the engine power setting below the first engine power setting range and one or more stages of the primary run-dry fuel pump run in the run-dry mode.

6. An aircraft engine system for an aircraft, the aircraft engine system comprising:
a compressor section (16) including a number of compressor stages;
a turbine section (20);
a combustor (18) fluidically connected to the compressor section and the turbine section; and
a dual fuel pump system comprising:
a primary run-dry fuel pump (112) comprising multiple stages (202A-202N), each of the stages configured to produce fuel pressure between a pump stage inlet (210A-210N) and a pump stage outlet (212A-212N), and at least one of the stages operable in a run-dry mode;
a secondary run-dry fuel pump (114) operable in the run-dry mode, wherein the secondary run-dry fuel pump is mechanically driven by an accessory gearbox (40) of an engine of the aircraft;
an electric motor (124) operably coupled to the primary run-dry fuel pump and configured to drive rotation of the stages of the primary run-dry fuel pump; and
a controller (150) configured to pressurize fuel using a single stage of the primary run-dry fuel pump in a first engine power setting range between start and cruise and pressurize fuel using the secondary run-dry fuel pump to provide pressurized fuel to an actuation system of the aircraft while the single stage of the primary run-dry fuel pump is driven to pump fuel at the engine power setting below the first engine power setting range.

7. The aircraft engine system according to claim 6, wherein the controller (150) is configured to pressurize fuel using at least two stages of the primary run-dry fuel pump (112) at a second engine power setting range between climb and takeoff, and pressurize fuel using the single stage of the primary run-dry fuel pump at an engine power setting below the first engine power setting range.

8. The aircraft engine system according to claim 6 or 7, wherein a primary pump outlet (128) of the primary run-dry fuel pump is operably coupled to a main fuel passage (130), and a pump outlet (132) of the secondary run-dry fuel pump is operably coupled to a secondary flow passage (134); and optionally wherein the aircraft engine system further comprises a valve (136) operatively coupled to the main fuel passage and the secondary flow passage, wherein the controller (150) is configured to open the valve to provide pressurized fuel from the primary run-dry fuel pump to the actuation system at the first engine power setting range and/or the second engine power setting range.

9. The aircraft engine system according to any of claims 6 to 8, wherein the controller (150) is configured to flood the single stage of the primary run-dry fuel pump (112) with fuel in the first engine power setting range while the secondary run-dry fuel pump (114) runs in the run-dry mode; and/or wherein the controller is configured to flood at least two stages of the primary run-dry fuel pump with fuel at the second engine power setting range while the secondary run-dry fuel pump runs in the run-dry mode.

10. The aircraft engine system according to any of claims 6 to 9, wherein the controller (150) is configured to flood the secondary run-dry fuel pump (114) with fuel while the single stage of the primary run-dry fuel pump (112) is flooded with fuel at the engine power setting below the first engine power setting range and one or more stages of the primary run-dry fuel pump run in the run-dry mode.

11. A method of controlling a dual fuel pump system of an aircraft, the method comprising:
pressurizing fuel using a single stage of a primary run-dry fuel pump of the dual fuel pump system in a first engine power setting range between start and cruise, wherein the primary run-dry fuel pump comprises multiple stages driven by an electric motor;
pressurizing fuel using at least two stages of the primary run-dry fuel pump at a second engine power setting range between climb and takeoff;
pressurizing fuel using the single stage of the primary run-dry fuel pump at an engine power setting below the first engine power setting range; and
pressurizing fuel using a secondary run-dry fuel pump of the dual fuel pump system to provide pressurized fuel to an actuation system of the aircraft while the single stage of the primary run-dry fuel pump is driven to pump fuel at the engine power setting below the first engine power setting range, wherein the secondary run-dry fuel pump is operably coupled to an accessory gearbox driven by an engine of the aircraft.

12. The method of claim 11, wherein a primary pump outlet of the primary run-dry fuel pump is operably coupled to a main fuel passage, a pump outlet of the secondary run-dry fuel pump is operably coupled to a secondary flow passage, and a valve is operatively coupled to the main fuel passage and the secondary flow passage; and optionally further comprising the step of
opening the valve to provide pressurized fuel from the primary run-dry fuel pump to the actuation system at the first engine power setting range and/or the second engine power setting range.

13. The method of claim 11 or 12, further comprising:
flooding the single stage of the primary run-dry fuel pump with fuel in the first engine power setting range while the secondary run-dry fuel pump runs in the run-dry mode.

14. The method of claim 11, 12 or 13, further comprising:
flooding at least two stages of the primary run-dry fuel pump with fuel at the second engine power setting range while the secondary run-dry fuel pump runs in the run-dry mode.

15. The method of any of claims 11 to 14, further comprising:
flooding the secondary run-dry fuel pump with fuel while the single stage of the primary run-dry fuel pump is flooded with fuel at the engine power setting below the first engine power setting range and one or more stages of the primary run-dry fuel pump run in the run-dry mode.
